# EUROPEAN PATENT APPLICATION

(11) **EP 4 685 870 A1**
(43) Date of publication of application: **28.01.2026**
(21) Application number: 24884935.8
(22) Date of filing: 31.10.2024
(51) Int. Cl.: H01M 4/36, H01M 4/38

(54) **NEGATIVE ELECTRODE MATERIAL AND PREPARATION METHOD THEREFOR, AND SECONDARY BATTERY**

(30) Priority: 31.10.2023 CN 202311433921
(71) Applicant: BTR New Material Group Co., Ltd., Shenzhen, Guangdong 518106 (CN); Dingyuan New Energy Technology Co., Ltd., Huizhou, Guangdong 516227 (CN)
(72) Inventor: WANG, Jingwei, Shenzhen, Guangdong 518106 (CN); PANG, Chunlei, Shenzhen, Guangdong 518106 (CN); SHI, Xiaotai, Shenzhen, Guangdong 518106 (CN); REN, Jianguo, Shenzhen, Guangdong 518106 (CN); HE, Xueqin, Shenzhen, Guangdong 518106 (CN)
(74) Representative: advotec.
(86) International application number: PCT/CN2024/129106
(87) International publication number: WO 2025/092937

(57) **Abstract**

An anode material includes a silicon-based core and a carbon layer coated on at least part of a surface of the silicon-based core. The silicon-based core includes nano-silicon and a silicate containing a metal M element. The anode material is subjected to section and energy spectrum analysis, k1≤10, k2≤5, and 0.1<k2/k1≤ 1 are satisfied. The method for preparing the anode material includes: heating and evaporating the pre-disproportionated silicon oxide material and M metal source material to obtain silicon oxide gas and metal source gas; mixing and condensing these two gases to obtain the core material; and performing carbon coating treatment to obtain the anode material. The metal silicate in the prepared anode material effectively separates a nano-silicon domain and a silicon oxide domain, is relatively uniform in distribution, and has high initial Coulombic efficiency and good cycle performance.

## Description

This application claims priority to Chinese Patent Application 2023114339212, filed on October 31, 2023, the content of which is incorporated herein by reference in its entirety.

### TECHNICAL FIELD

The present disclosure relates to the technical field of battery materials, and in particular to an anode material, a preparation method thereof and a secondary battery.

### BACKGROUND

Among many anode materials, silicon oxide anode materials are high-specific capacity anode materials which are mature in current application technology. Compared with graphite anode materials, the specific capacity of the silicon oxide anode materials is up to 2100 mAh/g. Compared with crystalline silicon anode materials, the silicon oxide anode materials overcome the problem of large volume expansion, and greatly improve the cycle life of the anode material. However, due to that the formation process of Li₂O and lithium silicate in the first lithium intercalation process of the silicon oxide material is irreversible, the loss of lithium caused by these irreversible reactions results in low initial coulombic efficiency, and when designing a secondary battery, excessive positive electrode capacity is required to match. Therefore, on one hand, the high specific capacity of the anode is counteracted, and the energy density of the secondary battery is reduced; on the other hand, the positive electrode consumption cost of the secondary battery is increased.

In order to solve the problem of low coulombic efficiency of initial charging and discharging, the consumption of lithium ions in the positive electrode material by the irreversible phase Li₂O generated during the first charging can be reduced by a method of reducing the oxygen content in the silicon oxide in advance, thereby improving the energy density of the secondary battery. A conventional method includes: adding an exogenous reductant metal element, reacting with the oxygen element in the silicon oxide, and performing reduction to generate the nano-silicon, so that the coulombic efficiency of the material is improved, in addition, the metal oxide or silicate generated by the reduction reaction can serve as a buffer matrix, stress damage caused by volume change of the nano-silicon in the lithium alloying and dealloying processes is adjusted, thereby maintaining the structure be complete, improving the long-term cycle performance of the material.

For example, in a method for improving the first-cycle coulombic efficiency of silicon oxide by heating solid-state doping reduction reaction using a mixture of silicon oxide powder and magnesium metal powder, the physical and chemical properties of magnesium silicate in the anode material prepared by the method are relatively stable, the stability of aqueous slurry is good, however, due to that the magnesium thermal reduction reaction is a diffusion-controlled reaction, the composition of the product is closely related to the diffusion rate of magnesium vapor, when the powder is mixed in a micron-scale state, the magnesium vapor generated by heating starts to react from the outside of the silicon oxide particles and gradually diffuses into the particles, and the generation of by-products such as magnesium silicide, magnesium oxide or the like and the rapid growth of silicon crystal grains are easily caused by the excessive local magnesium. Moreover, due to that the speed of inward diffusion of the magnesium vapor into the solid is generally small, it is difficult for the magnesium to be completely and uniformly doped into the silicon oxide material, and the distribution of the magnesium in the reduction product is also relatively non-uniform.

For the in-situ gaseous magnesium doping technology, the present disclosure further discloses a method for performing vacuum co-evaporation condensation after mixing the silicon and silicon dioxide mixture and the metal M, the initial Coulombic efficiency of the anode material prepared by the method reaches more than 83%, the effective utilization rate of lithium ions in the positive electrode material of the secondary battery is greatly improved, and the aqueous slurry has good stability. However, since the reaction of silicon oxide vapor generated by the silicon and silicon dioxide mixture under heating conditions is a solid-solid interface reaction, the amount of silicon oxide vapor generated also fluctuates greatly as the reaction proceeds. Therefore, in the process of mixed deposition of magnesium vapor and silicon oxide vapor, the local magnesium doping ratio is not controllable, which easily results in unbalanced growth of silicon crystal grains, affecting the cycle life and safety of the anode material.

Obviously, whether in the solid phase doping technology or the in-situ gaseous doping technology, the prepared anode material has uneven distribution of dopant elements or unbalanced growth of silicon crystal grains, that is, it is difficult to satisfy the uniform distribution of doping elements between a single particle and a plurality of particles at the same time. Based on this, there is an urgent need to prepare a new anode material to improve the electrochemical performance.

### SUMMARY

An object of the present disclosure is to provide an anode material, a preparation method thereof, and a secondary battery, doping of a nanoscale metal M is achieved through an in-situ doping technology to obtain an anode material in which the metal M is uniformly distributed, thereby reducing the oxygen content in the anode material, further applying to the battery to improve the initial Coulombic efficiency and cycle performance.

To achieve the above objective, the technical solution of the present disclosure is as follows.

In a first aspect, the present disclosure provides an anode material, including a silicon-based core and a carbon layer coated on at least part of a surface of the silicon-based core, the silicon-based core includes nano-silicon and a silicate containing a metal M element;

section and energy spectrum analysis are performed on the anode material, sections of n1 particles are randomly selected for surface scanning analysis to obtain n1 content values of the M element, a standard deviation k1 of the n1 content values of the M element is calculated, k1≤10; n2 points in the section of any particle are selected for point scanning analysis to obtain n2 content values of the M element, a standard deviation k2 of the n2 content values of the M element are calculated, where k2≤5, 0.1<k2/k1≤1, n1 is a natural number greater than or equal to 5, and n2 is a natural number greater than or equal to 5.

In a second aspect, the present disclosure further provides a method for preparing the anode material according to the first aspect. The method includes:

placing a metal source material and a pre-disproportionated silicon oxide material at different positions of a same vacuum heating system for heating evaporation respectively to obtain a metal source gas and a silicon oxide gas;

mixing and condensing the silicon oxide gas and the metal source gas to obtain a core material;

performing carbon coating treatment on the core material to obtain the anode material.

In a third aspect, the present disclosure further provides a secondary battery. The secondary battery includes the anode material according to the first aspect or the anode material prepared by the preparation method according to the second aspect.

The present disclosure has following beneficial effects.

According to the silicate containing the metal M element in the anode material system, the distribution of the M element satisfies certain characteristics from the energy spectrum analysis, the silicate containing the metal M element can effectively separate a nano-silicon domain and a silicon oxide domain, silicon cluster aggregation caused by electrochemical sintering of the nano-silicon in the charging and discharging cycle process is reduced, the performance degradation problem of the anode material is reduced, the anode material has high initial Coulombic efficiency and good cycle performance, and the silicate can serve as a buffer matrix of the nano-silicon and the silicon oxide to buffer volume change caused by lithium intercalation and deintercalation in the lithium intercalation and deintercalation process, so that the anode material has low expansion performance.

### BRIEF DESCRIPTION OF DRAWINGS

In order to more clearly illustrate the technical solutions of the embodiments of the present disclosure, the accompanying drawings required in the embodiments will be briefly described below, and it should be understood that following drawings only show some embodiments of the present disclosure, and therefore should not be considered as limiting the scope of the present disclosure.
FIG. 1 is an XRD spectrum of an anode material prepared in Example 1;
FIG. 2 is an SEM/EDS surface scanning image of a particle section of the anode material prepared in Example 1;
FIG. 3 is a high magnification SEM image of a particle section of the anode material prepared in Example 1;
FIG. 4 is a cycle capacity performance diagram of a secondary battery prepared in Example 1 and Comparative Example 1; and
FIG. 5 is a cycle expansion performance diagram of the secondary battery prepared in Example 1 and Comparative Example 1.

### DESCRIPTION OF EMBODIMENTS

### Terms:

The term "prepared by" is synonymous with "including". As used herein, the terms "comprising," "including," "having," "containing," or any other variation thereof, are intended to cover non-exclusive inclusion. For example, compositions, steps, methods, articles, or devices comprising the listed elements need not be limited to only those elements, but may include other elements not explicitly listed or elements inherent to such compositions, steps, methods, articles, or devices. The conjunction "consisting of" excludes any unpointed element, step, or component.

When equivalents, concentrations, or other values or parameters are represented as ranges defined by a range, an preferred range, or a series of upper and lower preferred values, this should be understood to disclose all ranges formed by any pairing of any upper range limit or preferred value with any lower range limit or preferred value, regardless of whether the ranges are separately disclosed. For example, when the range "1 to 5" is disclosed, the described ranges should be interpreted to include the ranges "1 to 4", "1 to 3", "1 to 2", "1 to 2 and 4 to 5", "1 to 3 and 5", or the like. When a numerical range is described herein, the range is intended to include its end values and all integers and fractions within the range unless otherwise stated.

In these embodiments, the parts and percentages are by mass unless otherwise indicated.

The term "parts by mass" refers to a basic measurement unit representing a mass ratio relationship of a plurality of components, and 1 parts may represent any unit mass, for example, may represent 1g, or may represent 2.689g, or the like. If we say that the mass part of component A is a part, and the mass part of component B is b part, it represents the ratio a: b of the mass of component A. Alternatively, it represents that the mass of the component A is aK, and the mass of the component B is bK (K is any number and represents a multiple factor). It may not be misinterpreted that, unlike the parts by mass, the sum of the parts by mass of all components is not limited to 100 parts.

The term "and/or" is used to indicate that one or both of the illustrated situations may occur, e.g., A and/or B include (A and B) and (A or B).

In order to obtain a silicon oxide anode material with good performance, in the research in the related art, the gaseous lithium generated by the reduction reaction of the lithium-containing oxide or the silicate and the reducing agent are uniformly doped into the silicon powder and silicon micropowder to prepare a silicon-based composite anode material, the initial Coulombic efficiency can be as high as about 90%, but the prepared anode material has large silicon crystal grains and poor cycle performance. Silicon powder, SiO₂ powder, magnesium powder and LiCl powder are placed in different chambers of the same vacuum system, heated and sublimated, cooled to obtain the magnesium-lithium-co-doped modified precursor, and then coated with a conductive layer. The obtained anode material not only has a high initial Coulombic efficiency, but also has the characteristics of high ionic conductivity of lithium silicate and high bonding strength of magnesium silicate, further improving the cycle life of the material. However, the preparation conditions are strict, and the expansion of the anode material during charging and discharging is too large. In addition, there is also a method of preparing silicon-based anode materials by mixing and vacuum co-evaporation condensing a mixture of the silicon, the silicon dioxide and metal M. Although the initial Coulombic efficiency of the material is improved, the poor uniformity of steam evaporation mixing leads to uneven crystal grain size and poor electrical performance of the produced silicon, which poses certain safety risks.

The main purpose of the present disclosure is to provide an anode material with a metal M element conforming to the certain distribution characteristic, which solves the problem of two-phase and multi-phase steam mixing, so that the anode material has high initial Coulombic efficiency and good cycle performance, and also has low expansion performance.

In a first aspect, the present disclosure provides an anode material. The anode material includes a silicon-based core and a carbon layer coated on at least part of a surface of the silicon-based core. The silicon-based core of the anode material includes nano-silicon and a silicate containing a metal M element.

The anode material is subjected to section and energy spectrum analysis, especially the distribution of the M element in the core is analyzed, and the result is calculated to obtain the k1 value and the k2 value.

Generally, the anode material is a powder material, including a plurality of silicon-based cores and particles formed by carbon layers coated on at least part of surfaces of the silicon-based cores. In particular, n1 particles of the anode material are randomly selected for cutting to sections, surface scanning energy spectrum analysis is performed on the sections of the n1 particles to obtain n1 content values of the M element, and standard deviation k1 of the n1 metal content values of the M element is calculated, k1≤10. n2 points in the section of any particle are randomly selected for point scanning analysis to obtain n2 content values of the M element, the standard deviation k2 of the n2content values of the M element is calculated, k2 ≤ 5, and the k1 value and the k2 value also satisfy 0.1<k2/k1≤1, n1 is a natural number greater than or equal to 5, and n2 is a natural number greater than or equal to 5. The above contents are mass content.

According to the anode material satisfying the conditions, the metal silicate in the silicon-based core can effectively separate a nano-silicon domain and a silicon oxide domain, and the performance degradation problem of the anode material caused by silicon cluster aggregation is reduced.

When the anode material satisfies the ranges of k1 and k2 at the same time, the silicate containing the metal M element is uniformly distributed in the core, and the nano-silicon or silicon oxide is coated and isolated, so that the problem of processing gas production caused by active silicon exposure and the problem of nano-silicon cluster sintering in the circulation process are reduced, a more stable material structure is brought, and the consumption of active silicon in the circulation process is reduced.

In the present disclosure, the setting of standard deviations k1 and k2 not only quantifies the distribution uniformity of the metal M element in the anode material, but also improves the performance of the anode material by defining the regular relationship between the standard deviations of the M element content in the single particle (k2) and between the plurality of particles (k1).

The standard deviation k2 representing the uniform distribution within a single particle is limited to 5 or less, indicating that within a single particle, the metal M element is uniformly dispersed throughout the particle on a nanometer scale. The standard deviation k1 representing the uniform distribution between the plurality of particles is defined at 10 or below, indicating that the content distribution of the M element is also uniform between different particles. This indicates that the metal M element is not only uniformly distributed in a single particle, but also has good consistency in the particle set of the entire anode material, which avoids the problem caused by the content difference of the M element among different particles.

Further, the ratio of k2/k1 is limited between 0.1 and 1, which means that the uniformity between the interior of the single particle and the plurality of particles is coordinated, that is, the uniformity of the distribution of the M element in the interior of the particle and between the particles is better without significant inconsistency. The setting of this ratio avoids two extreme cases: one is uniform distribution in the single particle but non-uniform distribution between the particles, and the other is uniform overall but non-uniform distribution in the particle. In the related art, whether solid phase doping or gaseous phase doping, it is often difficult to ensure the uniformity of the two kinds of uniformity at the same time, especially when there is a significant difference in particle size, morphology or internal structure, the distribution of the M element is difficult to achieve. However, the present disclosure not only realizes nanoscale uniform doping of the M element, but also maintains such uniformity in the single particle and between a plurality of particles, which effectively solves the problems in the related art.

The anode material is high in initial Coulombic efficiency, good in cycle performance and low in volume expansion rate, and is mainly based on uniform distribution of metal silicate and effective separation and protection effects on the nano-silicon and the silicon oxide. In summary, the standard deviations k1 and k2, and the setting of k2/k1 of the present disclosure not only quantify the distribution uniformity of the metal M element in the anode material, but also solve the technical problem in the related art that it is difficult to achieve the uniform distribution of the M element in a single particle and between a plurality of particles at the same time, and significantly improve the electrochemical performance of the anode material and the secondary battery using the same.

The silicate containing metal M element may be written as (MO)ₙ·SiO₂, in a preferred embodiment, in the anode material of the present disclosure, the silicate with a low proportion of (MO)ₙ and a high proportion of SiO₂ is the main silicate phase. Taking the silicate of magnesium metal as an example, when MgSiO₃(MgO·SiO₂) is the main silicate phase in the anode material, the pH value of the anode material is relatively low, however, if the content of Mg₂SiO₄(2MgO·SiO₂) is relatively high, Mg₂SiO₄ is hydrolyzed to generate more OH⁻, thereby causing a relatively high pH, and OH⁻ is easily reacted with exposed active Si to generate H₂, so that the initial Coulombic efficiency of battery capacity degradation is caused, and the generated gas also cause serious processing problems when the battery is slurried and coated, which may cause the battery to bulge or burst, thereby causing a safety risk. Therefore, when 0<m(Mg₂SiO₄₎/m(MgSiO₃₎≤1, the ability to increase the pH value is weak; therefore, the pH value range of the anode material can be stably maintained within an appropriate range, so that the problem that due to the fact that the pH value is too high, exposed Si in the anode material reacts with OH⁻ in the aqueous slurry to generate H₂, which lead to initial Coulombic efficiency degradation of capacity and gas production or the like is reduced.

Therefore, when the silicate containing the metal M element takes MgSiO₃ as a main body, H₂SiO₃ generated by hydrolysis of MgSiO₃ results in relatively weak slurry alkalinity, and when the content proportion of MgSiO₃ is relatively low and Mg₂SiO₄ proportion is relatively high, a large amount of Mg₂SiO₄ hydrolyze to form H₄SiO₄, in addition more OH⁻ is produced, which lead to an increase in the alkalinity of the slurry, OH⁻ react with the exposed active silicon in the negative electrode material to generate H₂, thereby affecting the safety performance of the battery.

In a preferred embodiment of the present disclosure, the silicon-based core of the anode material further includes silicon oxide. More preferably, the nano-silicon is dispersed in the silicon oxide, and the surrounding of the nano-silicon or the silicon oxide is coated by the silicate containing metal M element. Through multiple protection of silicon oxide and metal silicate, exposure of active silicon can be reduced, in addition, the volume expansion rate of the charging and discharging process is reduced.

The silicon oxide may be represented by the general formula SiOₓ (0<x≤2, such as 0.1, 0.5, 0.8, 1, 1.2, 1.5, 1.8, 2 or a range value composed of any two values thereof). It may be a material formed by dispersing silicon particles in SiO₂, or may be a material having a tetrahedral structural unit, silicon atom is located at the center of the tetrahedral structural unit, and silicon atoms and/or oxygen atoms are located at four vertices of the tetrahedral structural unit.

In a preferred embodiment of the present disclosure, the silicon-based core of the anode material of the present disclosure has a D₅₀ in a range of 5.0 to 5.5 µm.

In a preferred embodiment of the present disclosure, the silicon crystal grains of the nano-silicon of the anode material of the present disclosure has a size <10nm.

The relative size of the anode material is controlled within the above range, so that the silicon crystal grain size is more balanced, the electrical performance and the safety performance are better, meanwhile, the particle size uniformity of the prepared anode material can be improved, the anode material has high-initial Coulombic efficiency and good cycle performance, and meanwhile, the expansion performance is low.

In a preferred embodiment of the present disclosure, the pH value of the anode material of the present disclosure satisfies 7<pH≤10.5, for example, 7.5, 8, 8.5, 9, 9.5, 10 or 10.5. More preferably, the pH value satisfies 7<pH≤10.

It can be understood that if the pH value in the anode material is too high, when the anode material is prepared into the anode slurry, the exposed Si reacts with OH⁻ in the slurry to generate H₂, then there may be the problem of that the slurry coating has bubble and the problem of the problem of cyclic performance degradation caused by the binder performance degradation due to excessive alkalinity, initial Coulombic efficiency degradation of the capacity of the battery, safety of the battery use or the like. The pH value of the anode material does not exceed 10.5, which greatly reduce the generation of gas, the performance of the battery is improved, and the problems of gas production of reaction between the active silicon and OH⁻ in an alkaline solution when slurry is prepared from the anode material, the problem of that the slurry coating has bubble and the problem of cyclic performance degradation caused by the binder performance degradation due to excessive alkalinity are solved.

In a preferred embodiment of the present disclosure, the metal M element includes at least one metal element in Groups IA, IIA and IIIA.

In a preferred embodiment of the present disclosure, the M element includes at least one of lithium, sodium, potassium, magnesium, calcium and aluminum, more preferably magnesium.

The silicate formed by the M element in the anode material can more fully separate the nano-silicon domain and the silicon oxide domain, thereby further reducing silicon cluster aggregation during charging and discharging, in addition, further buffering the expansion problem caused by intercalation and deintercalation, and better improving the initial Coulombic efficiency and cycle performance of the anode material.

In a preferred embodiment of the present disclosure, the anode material has a true density in a range of 2.0 g/cm³ -2.6 g/cm³, for example, 2.0 g/cm³, 2.1 g/cm³, 2.2 g/cm³, 2.3 g/cm³, 2.4 g/cm³, 2.5 g/cm³ or 2.6 g/cm³. More preferably, the true density is 2.3 g/cm³-2.6 g/cm³.

The true density of the anode material of the present disclosure is tested by a gas adsorption expansion method.

In a preferred embodiment of the present disclosure, the anode material has a specific surface area in a range of 2 m²/g-10 m²/g, for example, 2 m²/g, 4 m²/g, 6 m²/g, 8 m²/g or 10 m²/g.

The true density and the specific surface area of the anode material are limited within the above range, which is beneficial to improving the structural stability of the anode material, reducing the side reactions on the surface of the anode material, reducing the consumption of electrolyte, and ensuring higher energy density and good long cycle performance.

In a preferred embodiment of the present disclosure, a mass ratio of the M element in the anode material is 3% -20%, for example, 3%, 5%, 7%, 10%, 12%, 15%, 18% or 20%.

The above content of the M element is more beneficial to playing the role of separating the nano-silicon domain and the silicon oxide domain in the silicate form, so that the initial Coulombic efficiency and the cycle performance of the anode material are further improved.

In a preferred embodiment of the present disclosure, a mass ratio of the carbon layer on the surface of the anode material is 1%-20%, for example, 1%, 3%, 5%, 8%, 10%, 12%, 15%, 18% or 20%, more preferably 3%-7%.

In a preferred embodiment of the present disclosure, the surface carbon layer has a thickness in a range of 50 nm-500 nm, for example, 50 nm, 100 nm, 200 nm, 300 nm, 400 nm or 500 nm.

When the mass ratio and the thickness of the carbon layer are within the above ranges, it is more beneficial to reducing the problems of active silicon exposure and gas production and nano-silicon cluster sintering of the silicon-based core, so that the structure of the anode material is more stable, and the consumption of the active silicon in the cycle process is further reduced, so that is beneficial to obtaining the anode material with significantly improved initial Coulombic efficiency and cycle performance.

In a preferred embodiment of the present disclosure, when the silicate containing the metal M element includes MgSiO₃ in the XRD spectrum of the anode material, the diffraction peaks of MgSiO₃ (610) are between 30°-31°, the diffraction peaks of Si (220) are between 45°-50°, and the ratio of the intensities of the two diffraction peaks α=I_{Si(220)}/I_{MgSiO3(610)}, 0<α<2. In the above conditions, the silicate formed by the M element in the anode material can more fully separate the nano-silicon domain and the silicon oxide domain, thereby further reducing silicon cluster aggregation during charging and discharging, in addition, further buffering the expansion problem caused by intercalation and deintercalation, and better improving the initial Coulombic efficiency and cycle performance of the anode material.

In a preferred embodiment of the present disclosure, when the metal M element containing silicate comprises MgSiO₃, the average size of the MgSiO₃ crystal grains on a (610) crystal plane is calculated to be ≤30nm according to the XRD spectrum of the anode material and the Scherer formula Kλ = 0.9 λ/Bcosθ. In the above conditions, it is beneficial to forming a good Li⁺ conduction path, which further reduces the high impedance result caused by an excessively thick MgSiO₃ layer.

In a second aspect, the present disclosure further provides a method for preparing the anode material according to the first aspect. The method includes:
S1, placing a metal source material and a pre-disproportionated silicon oxide material at different positions of a same vacuum heating system for heating evaporation respectively to obtain a metal source gas and a silicon oxide gas;
S2, mixing and condensing the silicon oxide gas and the metal source gas to obtain a core material; and
S3, performing carbon coating treatment on the core material to obtain the anode material.

The method for preparing the anode material is simple in process and easy to operate, and can quickly realize industrialization. Through an in-situ doping technology, nanoscale doping of metal is realized by mixed deposition of a gaseous metal source and gaseous silicon oxide, and an anode material with uniformly distributed metal silicate is obtained. In particular, a pre-disproportionated silicon oxide material is used in the preparation method, silicon oxide steam can be continuously and stably generated, and then the silicon oxide steam is mixed with stably generated metal source gas to obtain an anode material with uniform substance distribution and better performance, so that the problem that when a traditional silicon and silicon dioxide mixture is used as a raw material, silicon oxide evaporation is unstable due to the influence of a material contact effect on interface reaction, and then the substances in the prepared anode material are not uniformly doped is solved.

Combining the second aspect, in a preferred embodiment of the present disclosure, a method for preparing the pre-disproportionated silicon oxide material in S1 includes: The amorphous SiO block is pre-disproportionated to obtain silicon oxide having a crystal grain size <20 nm containing disproportionated silicon crystal grains, preferably, the crystal grain size of the silicon crystal grains is <10 nm, and then the pre-disproportionated silicon oxide powder or particles are obtained by powdering or crushing treatment.

In the method for preparing the anode material, a silicon oxide source is used for pre-disproportionation treatment, wherein Si and SiO are in a nanoscale uniform dispersion form at any place, the silicon crystal grain size is <20 nm, the influence of reaction rate change caused by interface reaction contact area change is reduced, silicon oxide steam can be continuously and stably generated, and after the silicon oxide steam and magnesium steam continuously and stably generated are mixed with each other, the high-initial Coulombic efficiency silicon oxide anode product with uniform distribution and better performance is obtained.

Further preferably, the pre-disproportionation treatment is performed in an inert gas atmosphere, and the inert gas includes at least one of nitrogen, argon, and helium.

Further preferably, the pre-disproportionation treatment has a temperature in a range of 1000°C to 1200°C, for example, 1000°C, 1050°C, 1100°C, 1150°C or 1200°C, and a heat preservation time ranges from 3h to10h, for example, 3h, 5h, 6h, 8h or 10h. More preferably, the pre-disproportionation treatment is maintained at 1000°C for 10h.

In the above conditions, the silicon and the silicon oxide in the silicon oxide source are more uniformly dispersed and contacted, so that the silicon oxide steam is further continuously and stably generated, a good material basis is provided for subsequent participation in the formation process of the anode material, and the initial Coulombic efficiency and the cycle performance of the anode material are improved.

It should be noted that, in the present disclosure, a pre-disproportionated silicon oxide material is selected as a silicon oxide source, mainly to reduce instability of SiO evaporation caused by influence of a material contact effect on an interface reaction when traditional silicon and silicon dioxide are selected as raw materials. Homogenization and disproportionation treatment is performed on amorphous SiO to obtain silicon oxide with disproportionated silicon crystal grains <20 nm, so that a nanoscale uniformly dispersed silicon oxide steam source at the microscopic level of Si and SiO₂ is realized, the generation speed of silicon oxide steam in the whole reaction process is stabilized, and relatively uniform generation, mixing and condensation deposition of the silicon oxide gas and metal M source gas are realized.

In a preferred embodiment of the present disclosure, the pre-disproportionated silicon oxide material in S1 has a size ≤10 cm, for example, 10 µm, 100 µm, 1mm, 1 cm, 5 cm or 10 cm. It is beneficial to further reducing the influence of the change of the reaction rate caused by the change of the contact area of the interface reaction, and continuously and stably generating silicon oxide steam to participate in the reaction.

In a preferred embodiment of the present disclosure, the metal source material in S1 includes at least one of a magnesium source material, a lithium source material, a sodium source material, a potassium source material, a calcium source material, and an aluminum source material, and more preferably is the magnesium source material.

Further preferably, the magnesium source material includes at least one of metal magnesium powder, metal magnesium ingot, metal magnesium particles, a mixture of a magnesium-containing oxide and a reducing substance, and a mixture of a magnesium-containing salt and a reducing substance.

In a preferred embodiment of the present disclosure, the metal source gas in S1 includes at least one of magnesium vapor, lithium vapor, sodium vapor, potassium vapor, calcium vapor and aluminum vapor, more preferably magnesium vapor.

In the above conditions, the formed metal silicate can more fully separate the nano-silicon domain and the silicon oxide domain, thereby better improving the initial Coulombic efficiency and cycle performance of the anode material.

In a preferred embodiment of the present disclosure, when the metal source material and the pre-disproportionated silicon oxide material are respectively heated and evaporated at different positions of the same vacuum heating system, the pre-disproportionated silicon oxide material may be placed in the first vacuum heating chamber for heating and evaporation to obtain the silicon oxide gas; and the metal source material may be placed in the second vacuum heating chamber for heating and evaporation to obtain the metal source gas.

Specifically, inert gas is introduced into the first vacuum heating chamber, and the temperature is heated to 1000°C-1500°C to obtain a silicon oxide gas, for example, 1000°C, 1100°C, 1200°C, 1300°C, 1400°C or 1500°C.

The inert gas is introduced into the second vacuum heating chamber, and the temperature is heated to 600°C-1350°C (preferably 700°C-1300°C) to obtain a metal source gas, for example, 700°C, 800°C, 900°C, 1000°C, 1100°C or 1200°C.

It can be understood that in the same vacuum heating system, the heating and evaporation temperature of the metal source material and the pre-disproportionated silicon oxide material may be the same, or may be different.

In the above conditions, it is beneficial to fully evaporating the pre-disproportionated silicon oxide material and the metal source material at a more matched rate to obtain the corresponding gaseous raw material, in addition, the occurrence of local excessive uneven evaporation and deposition reaction can be further reduced to improve the structural stability and electrochemical performance of the anode material.

In a preferred embodiment of the present disclosure, the mixing of the two gases in S2 is performed under a vacuum condition with a vacuum degree of 0-100 Pa.

In a preferred embodiment of the present disclosure, a condensation temperature in S2 ranges from 500°C to 900°C, for example, 500°C, 600°C, 700°C, 800°C or 900°C.

Further preferably, the condensation method includes at least one of water cooling and air cooling.

In an embodiment, the condensation deposition chamber is vacuumed, when the vacuum degree reaches below 100 Pa and the temperature of the condensation chamber reaches 500°C-900°C, gas in the two vacuum heating chambers is introduced into the condensation deposition chamber for mixing, and a precursor obtained by mixing silicon oxide and a metal source is collected on the condenser.

In the above conditions, it is beneficial for the pre-reaction after mixing and condensing of the two-phase gas, the deposition state is more stable, the probability of oxidation after the product is exposed in air is further reduced, and the M metal source improves the utilization rate of the initial Coulombic efficiency.

In a preferred embodiment of the present disclosure, after condensing in S2, further includes: collecting the condensed precursor material, and crushing and grading the precursor material to obtain a core material, preferably, the precursor material has a volume distribution D₅₀ in a range of 5.0 to 5.5 µm.

Further preferably, the crushing method includes any one of mechanical crushing, ball milling crushing and airflow crushing.

In the above conditions, the particle size uniformity of the prepared anode material can be further improved, so that is beneficial to the progress of the subsequent slurry combination process and the improvement of the preparation and performance of the battery.

In a preferred embodiment of the present disclosure, the carbon coating treatment in S3 includes gaseous phase coating, liquid phase coating or solid phase coating.

When the surface carbon layer is prepared by gas phase coating, the gas required for gaseous phase coating includes a carbon source gas and a carrier gas; the temperature of gas phase coating is 700°C-1000°C, for example, 700°C, 800°C, 900°C or 1000°C.

In an embodiment, the carbon source gas includes at least one of methane, ethane, propane, butane, ethylene, propylene, and acetylene.

In an embodiment, the carrier gas includes at least one of nitrogen, argon and helium, and preferably, an atmosphere ratio of the carbon source gas, hydrogen and the carrier gas is (2-15): 1: 3.5, more preferably is (2-3): 1: 3.5.

In the above conditions, it is beneficial to the carbon material to be more fully and more uniformly coated on the surface of the silicon-based core, so that the nano-silicon or silicon oxide is coated and isolated, the problem of processing gas production caused by active silicon exposure and the problem of nano-silicon cluster sintering in the circulation process are reduced, a more stable material structure is brought, and the consumption of active silicon in the circulation process is reduced. Further preferably, in the gaseous phase coating process, in addition to the carbon source gas and the carrier gas, a certain proportion of hydrogen may be introduced, which is mainly used to adjust the structure of the carbon layer.

In a third aspect, the present disclosure further provides a secondary battery. The secondary battery includes the anode material according to the first aspect or the anode material prepared by the preparation method of the anode material according to the second aspect. The secondary battery provided by the present disclosure uses the above anode material, and has higher initial Coulombic efficiency and good charge-discharge cycle performance.

More preferably, the secondary battery is a rechargeable battery with a non-aqueous electrolyte.

Through an in-situ doping technology, the technical scheme of the present disclosure realizes nanoscale magnesium doping by taking gaseous magnesium as a magnesium source and performing mixing deposition on the gaseous silicon oxide to obtain an anode material conforming to metal M distribution characteristics and further conforming to a specific pH range, and performing heat treatment reduction to reduce the oxygen content in an active material, and preparing a high-initial Coulombic efficiency silicon oxide anode material by powdering, carbon coating or the like.

Typically, but not exclusively, k1 is 1, 2, 3, 4, 5, 6, 7, 8, 9, 10, or a range between any two of them; k2 is 1, 2, 3, 4, 5, or a range between any two of them; k2/k1 is 0.11, 0.2, 0.3, 0.4, 0.5, 0.6, 0.7, 0.8, 0.9, 1, or a range between any two of them; n1 is 5, 6, 7, 8, 9, 10, 11, 12, 13, 14, 15, 16, 17, 18, 19, 20, 30, 40, 50, 60, 70, 80, 90, 100, 150, 200, 250, 300, 350, 400, 450, 500, 600, 700, 800, 900, 1000, or a range between any two of them, n2 is 5, 6, 7, 8, 9, 10, 11, 12, 13, 14, 15, 16, 17, 18, 19, 20, 30, 40, 50, 60, 70, 80, 90, 100, 150, 200, 250, 300, 350, 400, 450, 500, 600, 700, 800, 900, 1000, or a range between any two of them.

Typically, but not exclusively, a volume distribution D₅₀ of the core material is 5.0 µm, 5.1 µm, 5.2 µm, 5.3 µm, 5.4 µm, 5.5 µm or a range between any two of them.

Typically, but not exclusively, an atmosphere ratio of the carbon source gas, the hydrogen gas, and the carrier gas is 2: 1: 3.5, 3: 1: 3.5, 4: 1: 3.5, 5: 1: 3.5, 6: 1: 3.5, 7: 1: 3.5, 8: 1: 3.5, 9: 1: 3.5, 10: 1: 3.5, 11: 1: 3.5, 12: 3.5, 13: 1: 3.5, 14: 1: 3.5, 15: 1: 3.5, or a range between any two of them.

The embodiments of the present disclosure will be described in detail below with reference to specific examples, but those skilled in the art will understand that following examples are only used to illustrate the present disclosure and should not be regarded as limiting the scope of the present disclosure. If specific conditions are not indicated in the Examples, it shall be carried out in accordance with the conventional conditions or the conditions recommended by the manufacturer. The reagents or instruments used are conventional products commercially available from manufacturers.

### Example 1

The present disclosure provides an anode material, and a method for preparing the anode material includes:
1) pre-disproportionation treatment was performed on the amorphous SiO block in an argon gas atmosphere at 1200°C for 10h, cooled and powdering treatment was performed to obtain pre-disproportionated silicon oxide powder containing silicon crystal grains with an average size of 6.0 nm, the volume distribution of the powder is D₅₀=100 µm, the powder was placed in a first vacuum heating chamber of the vacuum heating system, argon gas was introduced, and heated to 1400°C to obtain the silicon oxide gas;
2) the metal magnesium powder was placed in a second vacuum heating chamber of the vacuum heating system, argon gas was introduced, and heated to 700°C to obtain the magnesium vapor;
3) the vacuum heating system was vacuumed to a vacuum degree of 10 Pa;
4) the gas obtained in the first vacuum heating chamber and the gas in the second vacuum heating chamber was introduced in a condensation deposition chamber with a vacuum degree of 10 Pa, and a precursor material was collected on a water-cooled matrix with a temperature of 700°C in the condensation deposition chamber;
5) the precursor in step 4) was crushed to a volume distribution D₅₀=5.5 µm by methods of mechanical crushing, grading process or the like;
6) the powder material obtained in step 5) was placed in a rotary furnace, heated to 900°C, the methane, the hydrogen and the carrier gas nitrogen were introduced, an atmosphere ratio was adjusted to 2: 1: 3.5, and coated with a gaseous phase for 8h;
7) the coated material was collected, scattered, sieved and demagnetized to obtain the composite anode material containing silicon oxide.

This Example provides a secondary battery, and the specific preparation method includes:
the anode material, the conductive carbon black and the PAA adhesive prepared in the above Examples were prepared into anode slurry according to a mass ratio of 75: 15: 10, coated on copper foil, and dried to prepare an anode plate. A metal lithium sheet is used as a counter electrode, and a button battery is assembled in a glove box filled with argon.

At a current density of 0.1C, the button battery was charged and discharged according to a charging and discharging interval of 0.01-1.5V. The initial reversible specific capacity and the initial Coulombic efficiency of the battery are tested.

This Example further provides a secondary battery, and the specific preparation method includes:
The anode material was prepared according to the above Examples: Super-P: According to KS-6: CMC: SBR=92: 2: 2: 2: 2, anode slurry was prepared, coated on copper foil, and dried to prepare an anode plate. A metal lithium sheet is used as a counter electrode, and a button battery is assembled in a glove box filled with argon.

At the current density of 1C, the button battery was subjected to charging and discharging test according to the charging and discharging interval of 0.01V-1.5V, the volume expansion rate and the capacity retention rate of the battery after 50 cycles were obtained through test, and then the expansion performance in the cycle process was studied through a pouch cell in-situ expansion rate test method.

### Example 2

This Example provides an anode material, and a method for preparing the anode material includes:
1) pre-disproportionation treatment was performed on the amorphous SiO block in an argon gas atmosphere at 1200°C for 10h, cooled and powdering treatment was performed to obtain pre-disproportionated silicon oxide powder containing silicon crystal grains with an average size of 6.0 nm, the volume distribution of the powder is D₅₀=100 µm, the powder was placed in a first vacuum heating chamber of the vacuum heating system, argon gas was introduced, and heated to 1300°C to obtain the silicon oxide gas;
2) the metal magnesium powder was placed in a second vacuum heating chamber of the vacuum heating system, argon gas was introduced, and heated to 900°C to obtain the magnesium vapor;
3) the vacuum heating system was vacuumed to a vacuum degree of 5 Pa;
4) the gas obtained in the first vacuum heating chamber and the gas in the second vacuum heating chamber was introduced in a condensation deposition chamber with a vacuum degree of 5 Pa, and a precursor material was collected on a water-cooled matrix with a temperature of 800°C in the condensation deposition chamber;
5) the precursor in step 4) was crushed to a volume distribution D₅₀=5.0 µm by methods of mechanical crushing, grading process or the like;
6) the powder material obtained in step 5) was placed in a rotary furnace, heated to 980°C, the methane, the hydrogen and the carrier gas argon were introduced, an atmosphere ratio was adjusted to 3: 1: 3.5, and coated with a gaseous phase for 10h;
7) the coated material was collected, scattered, sieved and demagnetized to obtain the composite anode material containing silicon oxide.

The manufacturing and evaluation of the secondary battery provided in this embodiment are the same as those in Example 1.

### Example 3

This example provides an anode material, and its preparation method is similar to that of Example 1, except that:
step 2) the calcium metal powder was placed in a second vacuum heating chamber of the vacuum heating system, argon gas was introduced, and heated to 1300°C;

The manufacturing and evaluation of the secondary battery provided in this Example are the same as those in Example 1.

### Example 4

This example provides an anode material, and its preparation method is similar to that of Example 1, except that:
step 1), the pre-disproportionation treatment was performed at a temperature of 1000°C for 10h to obtain a pre-disproportionated silicon oxide powder containing 5.5 nm silicon crystal grains.

The manufacturing and evaluation of the secondary battery provided in this Example are the same as those in Example 1.

### Example 5

This example provides an anode material, and its preparation method is similar to that of Example 1, except that:
step 3) the vacuum degree was 50 Pa, step 4) the precursor material was collected at 800°C in a water-cooled matrix.

The manufacturing and evaluation of the secondary battery provided in this Example are the same as those in Example 1.

### Example 6

This example provides an anode material, and its preparation method is similar to that of Example 1, except that:
step 1), the pre-disproportionated silicon oxide material was blocks with the size of 5 cm.

The manufacturing and evaluation of the secondary battery provided in this Example are the same as those in Example 1.

### Example 7

This example provides an anode material, and its preparation method is similar to that of Example 1, except that:
1) pre-disproportionation treatment was performed on the amorphous SiO block in an argon gas atmosphere at 1000°C for 10h, cooled and powdering treatment was performed to obtain pre-disproportionated silicon oxide powder containing silicon crystal grains with an average size of 5.4 nm, the volume distribution of the powder is D₅₀=500 µm, the powder was placed in a first vacuum heating chamber of the vacuum heating system, argon gas was introduced, and heated to 1000°C to obtain the silicon oxide gas;
2) the metal magnesium powder was placed in a second vacuum heating chamber of the vacuum heating system, argon gas was introduced, and heated to 600°C to obtain the magnesium vapor;
3) the vacuum heating system was vacuumed to a vacuum degree of 0 Pa;
4) the gas obtained in the first vacuum heating chamber and the gas in the second vacuum heating chamber was introduced in a condensation deposition chamber with a vacuum degree of 0 Pa, and a precursor material was collected on a water-cooled matrix with a temperature of 500°C in the condensation deposition chamber;
5) the precursor in step 4) was crushed to a volume distribution D₅₀=5.5 µm by methods of mechanical crushing, grading process or the like;
6) the powder material obtained in step 5) was placed in a rotary furnace, heated to 700°C, the methane, the hydrogen and the carrier gas nitrogen were introduced, an atmosphere ratio was adjusted to 2: 1: 3.5, and coated with a gaseous phase for 10h;

The manufacturing and evaluation of the secondary battery provided in this Example are the same as those in Example 1.

### Example 8

This example provides an anode material, and its preparation method is similar to that of Example 1, except that:
1) pre-disproportionation treatment was performed on the amorphous SiO block in an argon gas atmosphere at 1200°C for 3h, cooled and powdering treatment was performed to obtain pre-disproportionated silicon oxide powder containing silicon crystal grains with an average size of 6.0 nm, the volume distribution of the powder is D₅₀=100 µm, the powder was placed in a first vacuum heating chamber of the vacuum heating system, argon gas was introduced, and heated to 1500°C to obtain the silicon oxide gas;
2) the metal magnesium powder was placed in a second vacuum heating chamber of the vacuum heating system, argon gas was introduced, and heated to 1350°C to obtain the magnesium vapor;
3) the vacuum heating system was vacuumed to a vacuum degree of 100 Pa;
4) the gas obtained in the first vacuum heating chamber and the gas in the second vacuum heating chamber was introduced in a condensation deposition chamber with a vacuum degree of 100 Pa, and a precursor material was collected on a water-cooled matrix with a temperature of 800°C in the condensation deposition chamber;
5) the precursor in step 4) was crushed to a volume distribution D₅₀=5.5 µm by methods of mechanical crushing, grading process or the like;
6) the powder material obtained in step 5) was placed in a rotary furnace, heated to 1000°C, the methane, the hydrogen and the carrier gas nitrogen were introduced, an atmosphere ratio was adjusted to 2: 1: 3.5, and coated with a gaseous phase for 8h;

The manufacturing and evaluation of the secondary battery provided in this Example are the same as those in Example 1.

### Comparative Example 1

This comparative example provides an anode material, and its preparation method is similar to that of Example 2, except that:
step 1) the silicon dioxide powder with a volume distribution of D₅₀=30 µm and the silicon powder with a volume distribution of D₃₀=10 µm were mixed uniformly according to a molar ratio of 1: 2, placed in a first vacuum heating chamber of the vacuum heating system, argon was introduced, and heated to 1400°C; step 4) a temperature of the water cooling matrix in the condensation deposition chamber was 850°C; step 6) only the methane and the carrier gas nitrogen were introduced, and the atmosphere ratio was adjusted to 3: 3.5.

The manufacturing and evaluation of the secondary battery provided in this comparative example are the same as those in Example 1.

The anode materials prepared in the above Examples and comparative examples were subjected to energy spectrum analysis of the Mg element, and the anode material prepared in Example 3 was subjected to energy spectrum analysis of the Ca element to obtain k1 and k2 values respectively.

Specific Test Method for Energy Spectrum Analysis: The prepared anode material particles were cut by using an Hitachi E-3500 ion grinder, the morphology structure of the section of the anode material particles was observed on an Hitachi S-4800 cold field emission scanning electron microscope, and the element composition and distribution of the anode material particle sections were observed in combination with an Oxford energy spectrometer.

At the same time, the anode materials prepared in the Examples and comparative examples were also tested for pH values: 5.00±0.01 g of powder sample was weighed, added to 45 mL of pure water, stirred and dispersed, standing after ultrasonic treatment for 5 min, and the supernatant after standing was tested using a Mitler FE20 pH meter, the pH value was read.

True Density Test: the true density of the anode material was measured by a gas adsorption expansion method using a Micromeritics AccuPyc II, USA.

Specific Surface Area Test: the specific surface area of the material was tested by using the Micromeritics TriStar II, USA, adsorption with nitrogen, and calculated by the BET method.

XRD Test: XRD characterization was performed on the sample by using an XRD diffractometer with a scan range of 10°-90°, the step distance of the scan was 0.05°.

Carbon Content% infrared absorption method was used according to standard GB/T 20123-2006.

Thickness of Carbon Layer: section SEM method was used, the material was cut by using a Hitachi E3500 ion grinder, and then analyzed by using a Hitachi S-4800 scanning electron microscope.

Mg Mass Content, Ca Mass Content: tested by using ICP Spectrometer (instrument: Agilent 5800 VDV-ICP-OES).

pH: tested with pH meter (instrument: Mettler Toledo FE20).

Performance test results of the anode materials prepared in the above Examples and comparative examples are shown in Table 1, and electrochemical test results of the anode materials prepared in the Examples and comparative examples in the secondary battery are shown in Table 2.

**Table 1. Test results of the performance of the anode materials of each Example and comparative example.**

| Examples | Carbon Content % | Thicknes s of Carbon Layer (nm) | Mg Mass% or Ca Mass% | pH | k1 | k2 | k2/k1 | True density (g/cm³) | Specific Surface Area (m²/g) | I_{Si(220)}/I_{MgSi O3(610)} | Calculated Size (nm) of MgSiO₃ |
|---|---|---|---|---|---|---|---|---|---|---|---|
| Example 1 | 3.6 | 80 | 7.5 | 8.90 | 0.83 | 0.29 | 0.35 | 2.41 | 4.3 | 0.9 | 11.1 |
| Example 2 | 5.5 | 130 | 8.2 | 9.50 | 1.46 | 0.37 | 0.25 | 2.45 | 4.7 | 0.8 | 12.5 |
| Example 3 | 3.7 | 90 | 7.0 | 8.50 | 2.4 | 0.97 | 0.40 | 2.47 | 5.2 | 1.2 | 9.9 |
| Example 4 | 3.5 | 85 | 7.0 | 8.30 | 2.12 | 0.85 | 0.40 | 2.47 | 5.9 | 1.2 | 10.2 |
| Example 5 | 4.2 | 120 | 8.3 | 9.62 | 6.91 | 3.70 | 0.54 | 2.39 | 7.3 | 1.7 | 8.3 |
| Example 6 | 4.5 | 140 | 9.5 | 10.13 | 5.91 | 3.27 | 0.55 | 2.40 | 3.9 | 1.3 | 10.5 |
| Example 7 | 2.5 | 70 | 6.8 | 8.12 | 2.95 | 2.16 | 0.73 | 2.39 | 6.7 | 1 | 11 |
| Example 8 | 6.5 | 180 | 7.5 | 8.89 | 3.96 | 3.54 | 0.89 | 2.43 | 7.3 | 1.2 | 13 |
| Comparati ve Example 1 | 5.8 | 160 | 9.2 | 10.92 | 7.72 | 0.61 | 0.08 | 2.36 | 3.6 | 4.0 | 4.1 |

**Table 2. Test results of the electrochemical performance of the batteries of each Example and comparative example.**

| Examples | Specific Capacity (mAh/g) | Initial Coulombic Efficiency ICE (%) | 50 Cycle Capacity Retention Rate (%) | Expansion Rate (%) |
|---|---|---|---|---|
| Example 1 | 1462 | 83.2 | 92.2 | 41.02 |
| Example 2 | 1445 | 83.9 | 90.1 | 42.11 |
| Example 3 | 1401 | 83.4 | 88.2 | 43.69 |
| Example 4 | 1425 | 83.5 | 87.7 | 40.93 |
| Example 5 | 1431 | 83.9 | 91.3 | 42.45 |
| Example 6 | 1412 | 84.1 | 87.3 | 40.85 |
| Example 7 | 1400 | 83.2 | 86.9 | 40.13 |
| Example 8 | 1420 | 83.9 | 87.9 | 41.14 |
| Comparative Example 1 | 1398 | 83.7 | 73.3 | 51.91 |

Through the above data analysis of Examples 1-8 and Comparative Example 1, the anode material standard deviations k1 and k2, and the setting of k2/k1 of the present disclosure not only quantify the distribution uniformity of the metal M element in the anode material, but also solve the technical problem in the related art that it is difficult to achieve the uniform distribution of the M element in a single particle and between a plurality of particles at the same time, and significantly improve the electrochemical performance of the anode material and the secondary battery using the same. The anode materials of Examples 1-8 are not only high in initial Coulombic efficiency, but also good in cycle performance, and have low volume expansion rate.

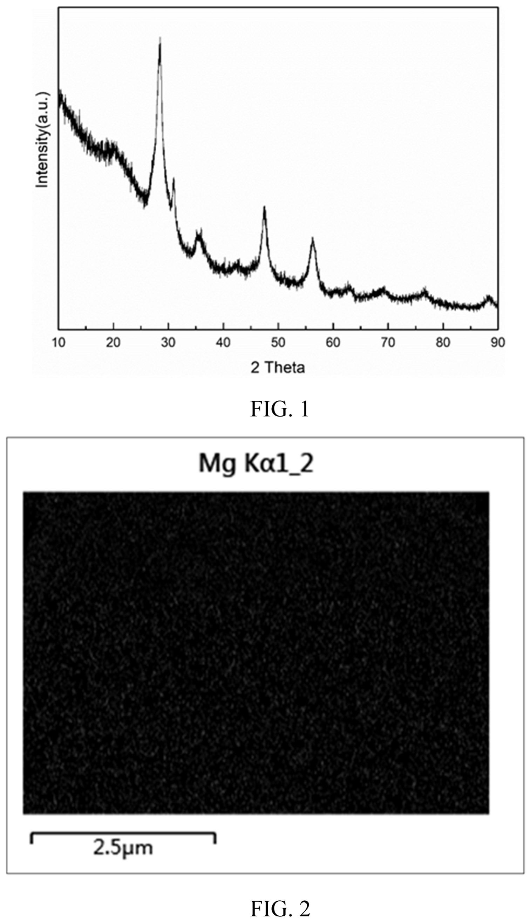

In addition, the XRD spectrum of the anode material prepared in Example 1 is also shown in FIG. 1, wherein MgSiO₃ (610) diffraction peak appears between 30° and 31°; Si (220) diffraction peak appears between 45° and 50°; and the ratio of the intensities of the two diffraction peaks α=I_{Si(220)}/I_{MgSiO3(610)}, α is 0.9.

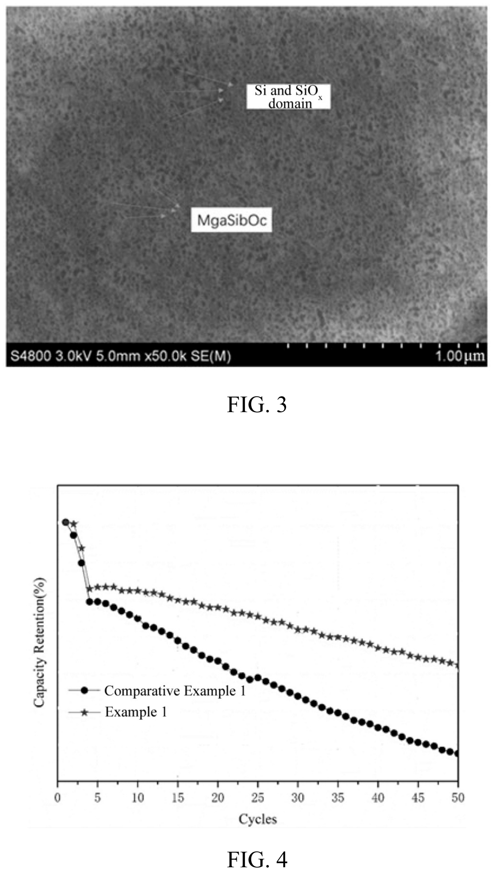

FIG. 2 and FIG. 3 respectively show an SEM/EDS surface scanning image of the Mg element in a particle section of the anode material prepared in Example 1, and a high magnification SEM image of the particle section. It can be seen from the figure that the metal silicate domain, the nano-silicon domain and the silicon oxide domain are uniformly dispersed and distributed, and the average size of the MgSiO₃ crystal grains on a (610) crystal plane is calculated to be 11.1 nm according to the XRD spectrum of the anode material and the Scherer formula Kλ=0.9 λ/Bcosθ.

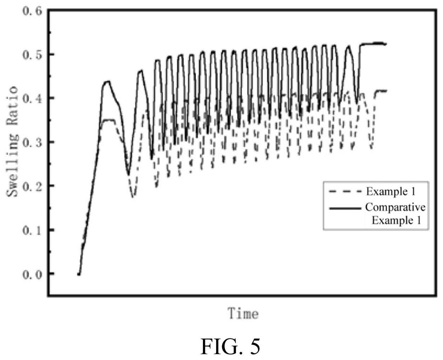

FIG. 4 and FIG. 5 respectively show a cycle-capacity diagram and a cycle-expansion diagram of the secondary battery prepared in Example 1 and Comparative Example 1, and it can be seen through comparison that the anode material prepared in the present disclosure has better cycle performance and lower cycle expansion performance.

Finally, it should be noted that: the above embodiments are only used to illustrate the technical solutions of the present disclosure, but not to limit the same. Although the present disclosure has been described in detail with reference to the above embodiments, those skilled in the art should understand that: the technical solutions described in the above embodiments of the present disclosure may still be modified, or some or all of the technical features may be equivalently replaced. These modifications or substitutions do not make the essence of the corresponding technical solutions depart from the scope of the technical solutions in the embodiments of the present disclosure.

Furthermore, those skilled in the art will appreciate that while some embodiments herein include certain features included in other embodiments rather than other features, combinations of features of different embodiments are meant to be within the scope of the present disclosure and form different embodiments. For example, any of the above-described claimed embodiments may be used in any combination. The information disclosed in this Background section is intended only to deepen the understanding of the general background of the disclosure and should not be taken as an admission or implying in any form that this information constitutes related art already known to those skilled in the art.

## Claims

1. An anode material, comprising a silicon-based core and a carbon layer coated on at least a part of a surface of the silicon-based core, wherein the silicon-based core comprises nano-silicon and a silicate containing a metal M element;
section and energy spectrum analysis are performed on the anode material, sections of n1 particles are randomly selected for surface scanning analysis to obtain n1 content values of the M element, a standard deviation k1 of the n1 content values of the M element is calculated, k1≤10; n2 points in the section of any particle are selected for point scanning analysis to obtain n2 content values of the M element, a standard deviation k2 of the n2 content values of the M element are calculated, where k2≤5, 0.1<k2/k1≤1, n1 is a natural number greater than or equal to 5, and n2 is a natural number greater than or equal to 5.

2. The anode material according to claim 1, wherein at least one of following conditions is satisfied:
(1) the silicon-based core further comprises silicon oxide;
(2) the silicon-based core has a D₅₀ in a range of 5.0 to 5.5 µm;
(3) a size of silicon crystal grains of the nano-silicon is <10 nm;
(4) the anode material has a pH satisfying 7<pH≤10.5.

3. The anode material according to claim 1 or 2, wherein at least one of following conditions is satisfied:
(1) the M element comprises at least one metal element in groups IA, IIA and IIIA; and
(2) the M element comprises at least one of lithium, sodium, potassium, magnesium, calcium, and aluminum.

4. The anode material according to any one of claims 1-3, wherein at least one of following conditions is satisfied:
(1) the anode material has a true density in a range of 2.0 g/cm³ to 2.6 g/cm³; and
(2) the anode material has a specific surface area in a range of 2 m²/g to 10 m²/g.

5. The anode material according to any one of claims 1-4, wherein in the anode material, a mass ratio of the M element is 3% to 20%, and a mass ratio of the carbon layer is 1% to 20%.

6. The anode material according to any one of claims 1-5, wherein at least one of following conditions is satisfied:
(1) when the silicate containing the metal M element comprises MgSiO₃, in the XRD spectrum of the anode material, a diffraction peak of MgSiO₃ (610) is between 30° and 31°; the diffraction peak of Si (220) is between 45° and 50°; and a ratio α of intensities of two diffraction peaks satisfies α = I_{Si}(220)/I_{MgSiO3}(610), where 0<α<2; and
(2) when the metal M element containing silicate comprises MgSiO₃, an average size of the MgSiO₃ crystal grains on a (610) crystal plane is calculated to be ≤30nm according to the XRD spectrum of the anode material and the Scherer formula Kλ = 0.9 λ/Bcosθ.

7. The anode material according to claim 2, further satisfying at least one of following conditions:
(1) the nano-silicon is dispersed in the silicon oxide; and
(2) the nano-silicon or the silicon oxide is coated by the silicate containing metal M element.

8. The anode material according to any one of claims 1-7, wherein the carbon layer has a thickness in a range of 50 nm to 500 nm.

9. A method for preparing an anode material according to any one of claims 1-8, comprising:
placing a metal source material and a pre-disproportionated silicon oxide material at different positions of a same vacuum heating system for heating evaporation respectively to obtain a metal source gas and a silicon oxide gas;
mixing and condensing the silicon oxide gas and the metal source gas to obtain a core material; and
performing carbon coating treatment on the core material to obtain the anode material.

10. The method according to claim 9, wherein at least one of following conditions is satisfied:
(1) the method for preparing the pre-disproportionated silicon oxide material comprises: performing pre-disproportionation treatment on the amorphous SiO block to obtain silicon oxide containing disproportionated silicon crystal grains <20 nm, and performing powdering or crushing treatment to obtain pre-disproportionated silicon oxide powder or particles;
(2) the metal source material comprises at least one of a magnesium source material, a lithium source material, a sodium source material, a potassium source material, a calcium source material, and an aluminum source material; and
(3) the heating and evaporating of the pre-disproportionated silicon oxide material are performed at a temperature of 1000°C to 1500°C.

11. The method according to claim 9 or 10, wherein at least one of following conditions is satisfied:
(1) the heating and evaporating of the metal source material are performed at a temperature of 600°C-1350°C;
(2) after the condensation, further comprising: collecting the condensed precursor material, and crushing and grading the precursor material to obtain the core material, the core material has a volume distribution D₃₀ in a range of 5.0 to 5.5 µm; and
(3) the carbon coating treatment comprises gaseous phase coating, liquid phase coating or solid phase coating.

12. The method according to claim 11, wherein at least one of following conditions is satisfied:
(1) a temperature of the pre-disproportionation treatment is 1000°C to 1200°C;
(2) a heat preservation time of the pre-disproportionation treatment is 3h to 10h; and
(3) the gaseous phase coated gas comprises a carbon source gas and a carrier gas.

13. The method according to claim 12, wherein at least one of following conditions is satisfied:
(1) a temperature of the gaseous phase coating is 700°C-1000°C;
(2) the carbon source gas comprises at least one of methane, ethane, propane, butane, ethylene, propylene and acetylene; and
(3) the gaseous phase coated gas further comprises hydrogen, and an atmosphere ratio of the carbon source gas, the hydrogen, and the carrier gas is (2-15): 1: 3.5.

14. The method according to any one of claims 9-13, wherein the silicon oxide gas and the metal source gas are mixed under a vacuum condition with a vacuum degree of 0 to 100 Pa.

15. A secondary battery, comprising an anode material according to any one of claims 1-8.
